(19)

**Europäisches Patentamt**
**European Patent Office**
**Office européen des brevets**

(11) **EP 4 578 823 A1**

(12) **EUROPEAN PATENT APPLICATION**

(43) Date of publication:
**02.07.2025 Bulletin 2025/27**

(21) Application number: **23307414.5**

(22) Date of filing: **28.12.2023**

(51) International Patent Classification (IPC):
*B82B 1/00* $^{(2006.01)}$    *B82B 3/00* $^{(2006.01)}$
*B82Y 10/00* $^{(2011.01)}$    *B82Y 20/00* $^{(2011.01)}$
*G02F 1/35* $^{(2006.01)}$    *G02F 3/00* $^{(2006.01)}$
*G21K 1/00* $^{(2006.01)}$    *H04B 10/70* $^{(2013.01)}$
*H04L 9/08* $^{(2006.01)}$

(52) Cooperative Patent Classification (CPC):
**G02F 1/3511; B82B 1/00; B82B 3/00;**
**G02F 1/3526; H04B 10/70;** B82Y 10/00;
B82Y 20/00

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicants:
• **Pasqal**
**91300 Massy (FR)**
• **Sorbonne Université**
**75006 Paris (FR)**
• **Centre National de la Recherche Scientifique**
**75016 Paris (FR)**
• **Ecole Normale Supérieure**
**75005 Paris (FR)**

(72) Inventors:
• **THIEL, Valérian**
**91300 Massy (FR)**
• **SHEREMET, Alexandra**
**91300 Massy (FR)**
• **HENRIET, Loïc**
**91300 Massy (FR)**
• **TREPS, Nicolas**
**75006 Paris (FR)**

(74) Representative: **Slingsby Partners LLP**
**1 Kingsway**
**London WC2B 6AN (GB)**

(54) **METHOD AND SYSTEM FOR ALTERING A NONCLASSICAL STATE OF ELECTROMAGNETIC RADIATION**

(57) There is presented a method for altering a nonclassical state of EM radiation. A first matter particle is held within a first trap. A second matter particles is held within a second trap. The first and second traps being spatially separated. A nonclassical state of EM radiation is input to the plurality of matter particles with a first photon number distribution. The photon number distribution of the input nonclassical state of EM radiation is altered by interacting the input nonclassical state of EM radiation with the plurality of matter particles. The first matter particle is excited to a Rydberg state using a photon from the input nonclassical state of EM radiation. This excitation prevents an excitation, to a Rydberg state, of the second matter particle. The resulting altered nonclassical state comprises a second photon number distribution different to the first photon number distribution.

Fig. 1a

EP 4 578 823 A1

# Description

## Field of the invention

The field of the present invention is in changing nonclassical Electromagnetic (EM) radiation, in particular but not limited to outputting such EM radiation with a different photon number distribution.

## Background

Photons have shown great promises as a main resource for many quantum applications. They are among the first particles to have unveiled their quantum behaviour due to their ease of generation and detection. They have multiple degrees of freedom to multiplex information. With their degrees of freedom, the commercial applications of photons are numerous, from distance measurement to communication. Even though they are the only particles to automatically satisfy the majority of the so-called Da Vincenzo criteria which would make them the ideal carriers for quantum applications, this resource has stalled in that regard mainly due to their fragility and their low interaction, rendering conditional network operations to be tedious.

Circumventing these limitations comes with a heavy cost. The current state-of-the-art requires cleverly-designed setup that rely on stochastic generation and detection that comes with a massive overhead in technical resources which leads to errors and losses when attempting to scale up the technology.

Since photons exhibit both particle- and wave-like behaviour, two practically distinct formalisms called discrete variable (DV) or continuous variable (CV) emerged, the former being less dependent on careful loss management than the latter. CV formalism is more suitable for sturdy error correction, making it ideal for quantum information processing (QIP).

Currently, photonic quantum computing is dominated by DV methods, since counting photons has become very reliable thanks to superconducting detectors. Methods rely on building circuits with linear optics and beam splitters, taking advantage of the intrinsic properties of light such as long lifetime and low-losses propagation. Two-photon gates necessary for a universal set of gates in quantum computation are very challenging to build, and consequently error correction schemes aren't easily implementable.

Following superconductive qubits designs, there is a global push in research to develop CV-based photonic schemes that utilize continuous states. While the protocols are virtually the same as in DV, the original computational basis is infinite. Some specific states like Schrödinger cats can then bring a significant advantage in error correction, as a small deviation due to noise will immediately produce an orthogonal state. Reliable generation of non-Gaussian states therefore becomes a necessary stepping stone in CV-QIP.

The generation of nonclassical photonic quantum states, such as quantum non-Gaussian states, therefore, may play a key role in the future development of quantum computing and indeed other technical fields.

## Summary

According to a first aspect of the invention there is presented a method for altering a nonclassical state of EM radiation; the method comprising: I)arranging a plurality of matter particles such that: i) a first one or more of the plurality of matter particles is held within a first trap, ii) a second one or more of the plurality of matter particles is held within a second trap; the first and second traps being spatially separated; II) providing an input nonclassical state of EM radiation to the plurality of matter particles; the input nonclassical state comprising a first photon number distribution; III) altering the photon number distribution of the input nonclassical state of EM radiation by interacting the input nonclassical state of EM radiation with the plurality of matter particles such that at least one of the matter particles in the first trap is excited to a Rydberg state using a photon from the input nonclassical state of EM radiation; wherein: iii) the excitation of the at least one matter particle within the first trap prevents an excitation, to a Rydberg state, of at least one of the matter particles within the second trap; the prevented excitation being an excitation using the input nonclassical state; iv) the resulting altered nonclassical state comprises a second photon number distribution, the second photon number distribution being different to the first photon number distribution.

The method of the first aspect may be adapted in any way presented herein, including but not limited to any one or more of the following options.

Optionally, the method outputs the altered nonclassical state of EM radiation comprising the second photon number distribution.

Optionally, the input nonclassical state is a squeezed state.

Optionally, the input nonclassical state is a gaussian state.

Optionally, the input nonclassical state is a non-gaussian state.

Optionally, the output nonclassical state is a non-gaussian state.

Optionally, the output nonclassical state is a quantum non-gaussian state.

Optionally, the output nonclassical state is a squeezed non-gaussian state.

Optionally, the output nonclassical state is a Fock state.

Optionally, the EM radiation comprises a wavelength of light.

Optionally, the traps are EM traps.

Optionally, each EM trap is formed by focussing EM radiation to a beam waist.

Optionally the traps are located in a vacuum chamber.

Optionally, the traps are optical tweezers.

Optionally, there are a plurality of traps comprising three or more traps wherein each of the one or more traps comprises at least one of the plurality of matter particles.

Optionally, the plurality of traps are located along a line in space or about plane in space.

Optionally, the plurality of traps form an array or lattice of traps.

Optionally, the plurality of traps form a regular array of traps.

Optionally, the array of traps are at the vertices of a rectangular array.

Optionally, the centre-to-centre distance between at least two adjacent traps is the same as or less than the wavelength of the nonclassical EM radiation.

Optionally, the centre-to-centre distance between all adjacent traps is the same as or less than the wavelength of the nonclassical EM radiation.

Optionally, the centre-to-centre distance of adjacent traps is half the wavelength of the nonclassical EM radiation.

Optionally, the excited matter particle excites from a ground state to the Rydberg state.

Optionally, the excited matter particle excites from a ground state to the Rydberg state using:

the photon from the input nonclassical state of EM radiation; and,
a photon from a different EM radiation.

Optionally, the matter particles are neutral atoms.

Optionally, the neutral atoms comprise alkali metal atoms.

Optionally the alkali metal atom is Rubidium.

Associated with the first aspect there is presented a system for altering a nonclassical state of EM radiation; the system comprising: I) trapping apparatus for arranging a plurality of matter particles such that: i) a first one or more of the plurality of matter particles is held within a first trap, the first trap having a first position; ii) a second one or more of the plurality of matter particles is held within a second trap having a second position; the first and second traps being spatially separated; II) an EM source for providing an input nonclassical state of EM radiation to the plurality of matter particles; the input nonclassical state comprising a first photon number distribution; the system configured to alter the photon number distribution of the input nonclassical state of EM radiation from the interaction of the input nonclassical state of EM radiation with the plurality of matter particles where at least one of the matter particles in the first trap is excited to a Rydberg state using a photon from the input nonclassical state of EM radiation; wherein: the excitation of the at least one matter particle within the first trap prevents an excitation, to a Rydberg state, of at least one of the matter particles within the second trap; the prevented excitation being an excitation using the input nonclassical state; the resulting altered nonclassical state comprises a second photon number distribution, the second photon number distribution being different to the first photon number distribution.

The system of the first aspect may be adapted according to any teaching herein including, but not limited to, any one or more of the options presented for the method of the first aspect.

Brief list of figures

Embodiments of the present invention will now be described in detail with reference to the accompanying drawings, in which:

Figure 1a is a schematic example of a method presented herein;

Figure 1b is an example of an energy level diagram for use with the example of figure 1a;

Figure 1c is a further example of an energy level diagram for use with the example of figure 1a;

Figure 2 shows a further schematic example of a method presented herein;

Figure 3a shows a further schematic example of a method presented herein;

Figure 3b is an example of an energy level diagram for use with the example of figure 3a;

Figure 4 is an example of a system of components for altering a nonclassical state of electromagnetic radiation.

Detailed description

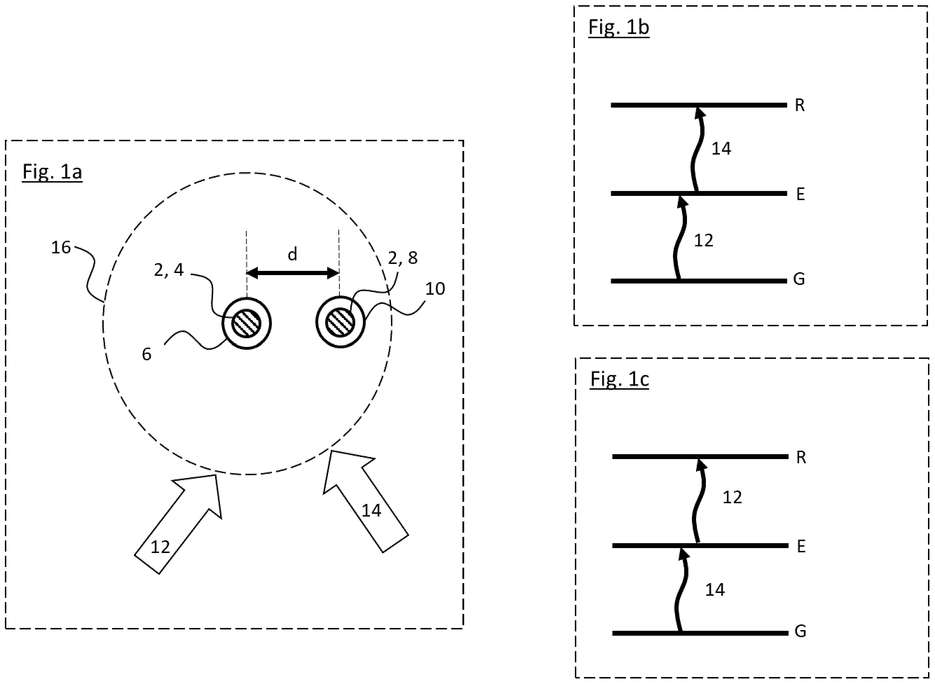

There is presented a method for altering a nonclassical state of EM radiation. Figure 1a shows a schematic example of this method. A plurality of matter particles 2 are arranged such that one or more 4 of the plurality of matter particles are held within a first trap 6 whilst a further one or more 8 of the plurality of matter particles is held within a second trap 10. The first trap 6 and second trap 10 are positioned to be spatially separated, for example by a distance 'd'.

A nonclassical state of EM radiation 12 is input to the plurality of matter particles 2 in both traps 6, 10. The input nonclassical state comprises a first photon number distribution.

Once the nonclassical state is input, the photon number distribution of the input nonclassical state of EM radiation is altered to have a second photon number distribution that is different to the first photon number distribution. This is achieved by interacting the input nonclassical state of EM radiation with the plurality of matter particles such that at least one of the matter particles in the first trap is excited to a Rydberg state using a photon from the input nonclassical state of EM radiation 12. The excitation of the at least one matter particle within the first trap prevents an excitation, to a Rydberg state, of at least one of the matter particles within the second trap. The excitation to the Rydberg state is achieved via the Rydberg blockade. The prevented excitation is an excitation using the input nonclassical state.

Figure 1a merely shows one example of this method and is described in more detail elsewhere herein. Other examples different to figure 1 that accord to the method are also feasible. The method therefore provides a method to generate a new nonclassical state of radiation from an input state by removing one or more (preferably a single) photons.. The input may be a squeezed state whilst the output may be a photon-subtracted squeezed state.

The matter particles may be neutral atoms or other matter particles such as ions or molecules. For example, trapped ions may be excited to a Rydberg state, hence becoming a Rydberg Ion, for example an Alkali-earth Rydberg Ion. Neutral atoms may be alkali metals including any of: lithium (Li), sodium (Na), potassium (K), rubidium (Rb), cesium (Cs), and francium (Fr). Alkali earth elements may be used as matter particles including any of: beryllium (Be), magnesium (Mg), calcium (Ca), strontium (Sr), barium (Ba), and radium (Ra). Lanthanide atoms may also be used, such as Ytterbium (Yb). Preferably all the matter particles are of the same element type and are preferably single atoms or single ions.

The atoms or ions may be any isotopes of those atoms/ions such as, for example, Rb-87. The number of matter particles in each trap may be one, or more than one. Where multiple matter particles are held within a trap the matter particles may form a cloud of matter particles with a random position in the same trap with respect to the other matter particles in the same trap.

The traps may be an electromagnetic radiation trap formed by focussing one or more beams of EM radiation to a beam waist, for example an optical tweezer. Other forms of trap may also be used such as a magneto-optical trap and evanescent field trapping.

The number of traps may be any of, but not limited to: two or more, for example five or more, 10 or more, 50 or more, 100 or more, 2-1000 traps. The trap size may vary, for example, but not limited to diameters of: $1\mu m$, $2\mu m$, $3\mu m$, $4\mu m$, $5\mu m$, $6\mu m$, $7\mu m$, $8\mu m$, $9\mu m$, $10\mu m$, or a diameter range between any two of the of these diameters. Other trapping sizes may be used, including beam waists of less than $1\mu m$. The EM field that traps a matter particle may be a result of two or more coherent light beams interfering wherein the EM amplitude of the interference fringes act as traps. The traps are preferably free-space traps. Preferably the physical component, such as an optical component, directing the EM radiation for forming the trap, is not adjacent to the trap and is far removed and distal from the trap, however evanescent traps where the waveguiding structure is adjacent to the trapping site may be used.

Preferably the distance between two adjacent traps is less than the wavelength of the input EM radiation. The distance here meaning the centre-centre distance between the traps. Where more than three traps are used, the distance between adjacent traps may be the same or substantially the same. A plurality of traps may form a 1D, 2D or 3D array of traps in a regular lattice-like arrangement or non-regular arrangements, although regularly spaced arrangements are preferred.

The input EM radiation is preferably an optical wavelength, preferably with a wavelength between 100nm and 1mm, more preferably 400-1650nm, more preferably 700-1650 nm, more preferably 700 - 900nm.

The transition of a matter particle in the first trap may be from any of: a ground state; an excited state. The transition of the matter particle may be facilitated using a single photon or multiple photons. Where multiple photons are used to transition the matter particle to the end Rydberg state the further one or more photons may be from further EM radiation or the input nonclassical state. The further EM radiation may be classical EM radiation and may optionally be input to all of the plurality of matter particles.

The non classical state of EM radiation for input to the plurality of matter particles may be generated using any suitable method or system. For example, any one or more of, but not limited to: Spontaneous parametric down-conversion (SPDC) photon sources; parametric amplification processing inside a cavity with a non-linear crystal; deterministic single-photon sources using quantum dots (QDs), nitrogen vacancy centres (NVs). The input nonclassical state may be a gaussian state or a non-gaussian state. The input nonclassical state may be input along a direction relative to a plane that the multiple traps lie along. For example, for a 2D array of traps located about a single plane, the input non classical EM radiation may be input along a direction parallel to the normal of that plane or at an angle of incident to that plane.

The input EM state is a nonclassical state. The input EM state cannot be a coherent state, nor a statistical superposition of coherent states. The Wigner function of the input EM state can be Gaussian or non-Gaussian, strictly positive or partially negative. For example, the input EM state may be squeezed state with a positive Gaussian Wigner function.

The output EM state is a nonclassical state. The Wigner function of the output EM state is non-Gaussian and can be partly negative. The photon distribution of the output EM state results from that of the input EM state after interaction with the plurality of matter particles. For example, when the input state is a weak pure squeezed state $\alpha_0|0> + \alpha_1|2>$, and when the interaction with the plurality of matter particles results in the subtraction of a single photon from the input EM state, then the output EM state is a single photon state |1>. When the input is a non-pure squeezed state, the output is a squeezed non-gaussian state.

As another example, if the input EM state is a nonclassical state that exhibits quantum correlations between two modes, and the plurality of matter particles interacts solely with one of the two modes, then the output EM field can be a non-gaussian entangled state.

More generally, if the input EM state is a super-position of Fock states $\sum_{i\geq0} \alpha_i|i>$ and if the interaction with the plurality of matter particles is the photon subtraction operation, then the output state is that of the input state with a photon subtracted $\sum_{i>0} \alpha_i \sqrt{i}|i-1>$.

The altered nonclassical state may be a non-gaussian state. The altered nonclassical state may have one photon removed. The altered non classical state may have a plurality of photons removed if multiple matter particles are excited to the Rydberg state, however preferably a single photon is removed from the nonclassical state.

The altered non classical state may be output in a random direction or, preferably, in a deterministic direction. Examples describing the output in a deterministic direction are presented elsewhere herein.

It is to be understood that any of the above general optional adaptations to the method and system presented herein may be applied to the following detailed examples and any other examples of the method and system presented herein.

Detailed examples

There is now presented examples of implementing the method, including system to achieve the implementation. It is to be understood that any of these examples may be adapted with components, configurations (and/or steps where a process or method is involved) and other features as presented in other examples herein. The adaption may be by addition or replacement. Existing features of these examples may be removed. Correspondingly, it is to be understood that other examples herein may be adapted with components, configurations (and/or steps where a process or method is involved) and other features as presented in this example. Such features may include, but are not limited to any one or more of: details about EM radiation; photon distribution; number and type of matter particles; number, type and size traps; equipment and components to give rise to the method; EM sources for generating EM radiation, EM components such as optics to direct EM radiation to/from the matter particles; components used to trap the matter particles.

Figure 1a shows a first example where the matter particles 2 are neutral atoms however other matter particles such as ions or molecules may be used. The neutral atoms are single atoms of rubidium. The traps used in figure 1a are EM traps formed at the beam waists of two EM beams. Figure 1a shows two traps 6, 10 spaced by a distance 'd' wherein d is measured from the respective centre points of the trap. More than two traps may be used. The traps in this example are formed using a laser wherein the output laser beam is input into an acousto-optic modulator (AOM) that is able to control the beam intensity over short time scales. The laser beam is output from the AOM and input into a spatial light modulator (SLM) that provides a wavefront phase shift such that when the laser beam radiation is output from the SLM and passes through one or more focussing lenses of a lens system, a pattern of spatially separated laser beam spots are created at an image plane of the lens system. Two of these spots 6, 10 are shown in figure 1a. The SLM is preferably a reflective liquid crystal phase modulator, however other SLMs and indeed other EM trap-forming systems may be used. In some examples, one or more traps may be formed using a plurality of trapping beams such as, but not limited to two pairs of interfering trapping beams in an orthogonal geometry. One or more optical tweezers, using EM radiation output from an EM source different to the EM source for the traps, may be used to move matter particles between traps. Such further optical tweezers may use an acousto-optic deflector to move the tweezer beam waist around the volume of space where the traps are formed. Such a further tweezer may be used to move one or more matter particles between traps, for example moving matter particles from a particle-occupied trap to an unoccupied trap. This may be required so that the method may create a plurality of occupied traps that are adjacent to each other or otherwise create a desired pattern of occupied traps.

In this example the method may start with a plurality of neutral atoms in a random ensemble within an environment such as a vacuum chamber. The atoms being generally free to move. A pattern of static traps is then created. Some traps may capture atoms whilst some may not. Atoms that are not captured by the traps may be evacuated from the environment. The determination as to which traps hold an atom may be determined by inputting EM radiation to the plurality of traps and detecting, with an EM radiation detector, which traps fluoresce. The fluorescing traps indicate trap occupancy. Other methods of trap filling and identification may be used. The method may then move atoms from occupied traps to other occupied traps or unoccupied traps to create the desired pattern of occupied traps before the nonclassical EM radiation is input. The equipment for forming the traps is not shown in figure 1a. The above trap occupancy development is optional and may be used in other examples herein.

Each trap 6, 10 is each holding one neutral atom 4, 8. The atom 4, 8 is shown to be located centrally in the trap however is it to be understood that the actual position of the atom 4, 8 in its respective trap may vary in that the absolute position of the atom in the trap is not known but occupies different positions in the trap with different probabilities wherein alignment to the centre of the trap has the highest probability. Figure 1a shows the traps to be 2-dimensional wherein in reality the traps are three dimensional. The traps 6, 10 shown in figure 1a are shown in cross section about a plane cutting through the beam waist of the two beams, hence along the image plane of the lens system. A spatial gap exists between the closest outermost edges of the two traps 6, 10 wherein it is understood that the trap edge occurs where the EM field is below a certain threshold, for example 1% of the peak intensity of the trap at its centre. If the wavelength of the nonclassical EM radiation is termed $\lambda_{NC}$, the spacing between the traps 'd' in this example is $0.8 \times \lambda_{NC}$, however other spacings 'd' may be used including, but not limited to: any sub-wavelength spacing; any spacings in the range $0.1\text{-}0.9 \times \lambda_{NC}$, $0.2\text{-}0.8 \times \lambda_{NC}$, $0.3\text{-}0.8 \times \lambda_{NC}$, $0.4\text{-}0.8 \times \lambda_{NC}$, $0.5\text{-}0.8\ \lambda_{NC}$. These spacings d may be used for any other example herein and may be used for any two adjacent trapped matter particles.

In this example two EM fields are input to the plurality of neutral atoms 2. The first is the nonclassical EM field 12. This nonclassical EM radiation has a first (or initial) photon number distribution as it is input to the neutral atoms 2. In this example, the input EM state is a squeezed state. Thus, the photon number distribution of the input EM state has significant probabilities for the vacuum state and the two-photon state, but insignificant probabilities for higher order states. Other photon number distributions may be used. The second is a further EM field 14 generated from a different EM source that the EM source generating the input EM radiation 12. This further EM radiation is classical radiation and is termed the 'control' signal. The control signal 14 is input to the plurality of neutral atoms 2 at the same time as the nonclassical EM radiation 12 is input to the neutral atoms 2. Thus, both the control signal 14 and nonclassical EM radiation interact with the neutral atoms at least partially at the same time.

Figure 1b shows an example of some of the energy levels of the neutral atoms 2 wherein the energy levels comprise a ground state G, an excited state E and a Rydberg state R. The wavelength, hence energy, of photons of the nonclassical EM radiation 12 are for transitioning the atom from the ground state G to the excited state E. The wavelength, hence energy, of photons of the control signal 14 are for transitioning the atom from the excited state E to the Rydberg state R. The Rydberg state (level) may be any Rydberg state, but is preferably a high Rydberg state, preferably greater than or equal to n=50. In this example the wavelength of the nonclassical light is 780nm whilst the wavelength of the control field is 480nm. These wavelengths may be used for Rubidium87 where ground is $5S_{1/2}$, excited $5P_{3/2}$, Rydberg $nS_{1/2}$, where n~>=50. In this example a two-photon transition is used however, in principle a single photon transition may be used, or a three or more-photon transition may be used. Other wavelengths may be used, for example having the nonclassical EM radiation 12 having an energy corresponding to the transitions from E-R and the control signal 14 having an energy corresponding to the transitions from G-E as shown in figure 1c. The control signal 14 may alternatively not be required and a single photon of the nonclassical EM radiation 12 is used to transition a neutral atom 2 between G-R; or two photons of the nonclassical EM radiation 12 may be used to transition a neutral atom 2 between G-R. The same variations in energy levels and excitations may be used for other matter particles.

Where multiple matter particles are spaced closely to each other at distances below the wavelength of the nonclassical EM radiation, the atoms may exhibit cooperative effects. Such effects may arise from the increasing influence of the dipole-dipole interaction. The effects may include modifying the atoms decay (hence changing the linewidth of the transition). The effects may also include detuning the resonant frequencies of the atoms. In other words, when the atoms are spaced close to each other, preferably sub wavelength spacings, the incoming EM radiation 'sees' an overall atom formed from the multiple atoms within the sub-wavelength distance. The more the atoms are closely spaced the greater the extent of the abovementioned effects and furthermore the more likely the EM radiation with be reflected back (hence a higher reflectivity constant). The reflection of the input EM state primarily in one mode, with the altered photon number distribution may be used in any example herein where the number of matter particles allows for such a reflection, for example at least ten matter particles. Furthermore, when atoms are arranged in traps with a regular periodic spacing, for example in a 1D or 2D equally spaced array, the atoms may collectively act as a diffraction grating to incoming EM radiation. Reducing the spacing between atoms, particularly to a sub-wavelength value, reduces unwanted effects of a diffraction grating such as unwanted diffraction orders. This phenomenon ensures that the interaction between the EM radiation and the matter particle is constrained only to that of the nonclassical EM radiation and no other spatial direction.

Turning back to the particular example in figure 1a, when the incoming nonclassical EM radiation 12 is incident upon the atoms 4, 8 and interacts with them, there is a possibility that one of the atoms 4, 8 absorbs one of the photons from the nonclassical EM radiation 12. This in turn changes the photon number distribution of the nonclassical state of the EM radiation. Thus, the atoms operate in a 'dissipative regime' by reducing number of photons. In figure 1a the atom 4 is the atom that absorbs one photon from the nonclassical radiation 12. It is assumed that the control field 14 is also incident at the same time to allow for the transition from G to R to occur. In operations, the control field 14 may be incident to the atoms 2 before and optionally after the nonclassical EM radiation 12 has interacted with the atoms 2.

By absorbing one of the photons from the nonclassical radiation 12 (and one of the photons from the control field), atom 4 transitions to the Rydberg energy level and, in turn manifests a Rydberg blockade. The atoms 4, 8 are spaced close enough such that the effective blockade radius 16 is greater than the spacing 'd' such that the other atom 8 in enclosed by the blockade radius 16 emanating out from atom 4. The Rydberg blockade effect from atom 4 stops atom 8 from absorbing a further photon from the nonclassical EM radiation 12.

Thus, the method, for this example, may be operated to deterministically, or close to deterministically, remove upto 1 photon from the nonclassical EM radiation 12. This may create a squeezed non-Gaussian state that may be used for a variety of applications. The altered nonclassical EM radiation may be output in any direction from the trapped matter particle 2 ensemble, however for certain matter particle trapping configurations, the method may be used to more deterministically determine the output direction of the altered nonclassical EM radiation, as discussed in the next example.

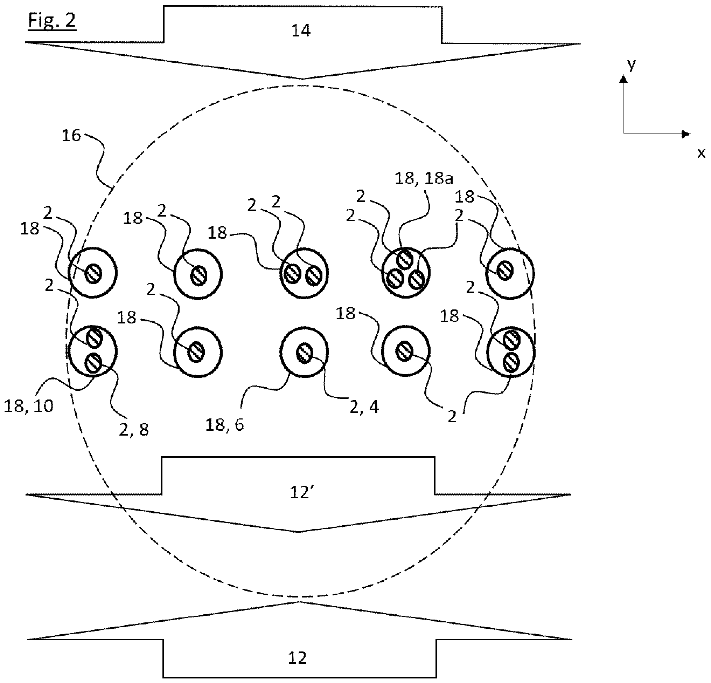

Figure 2a shows a further example of the operation of the method. The operation and features of figure 2a are similar to those of figure 1a with like references indicating like features. This example follows on from the previous example discussing figure 1a and uses the energy levels in figure 1b. In this example more than two traps are used, in this case a regular array of traps 18. In this example the number of traps is ten traps, however other numbers may be used such as fifty or more traps. The traps 18 are shown arranged in a 2D layout about a common plane about the x-y axes. The traps 18 are in a rectangular lattice-like arrangement wherein the distance between adjacent neighbouring traps is constant along the x axis and constant along the y axis, however the adjacent trap distance in the x axis is greater than that for the y axis. Alternatively, the y inter-trap distance may be the same as or greater than the x-axis inter-trap distance.

In this example multiple traps, for example trap 18a, are shown to hold multiple atoms 2. In this example the atom excited by the incoming nonclassical EM radiation 12 is atom 4 located in trap 6. The Rydberg blockade radius 16 resulting from atom 4 transitioning to the Rydberg state, covers all of the atoms 2 in the traps 18. As such, again, only one atom absorbs one photon from the nonclassical EM radiation 12, even though each atom 2 is subject to the nonclassical EM radiation and may in principle transition themselves. In this example the x axis inter-trap distance is at half of the wavelength of the nonclassical EM radiation 12. The nonclassical EM radiation, thus sees an overall 'atom' represented by all of the atoms.

By having the adjacent spacing, at least in one direction (the x-direction here), of X/2, each trap therefore has a distance to any other trap of an integer multiple of $\lambda/2$. This may allow the atoms to behave collectively to coherently direct the altered nonclassical EM radiation 12' in a direction dictated by the spatial structure of the matter particles.. For example, for reflection, the angle of incidence equals the angle of reflection about the normal to the trapping plane, allowing for coherent propagation of the altered nonclassical light 12' output from the atom ensemble. In principle, the spacing may be x * λ where x < 1 (for example, x=0.2 or 0.8 may give best performance. In figure 2a the nonclassical light 12 is incident directly onto the x-axis at the normal. The altered nonclassical EM radiation 12', with one photon missing from the initial photon distribution, is reflected directly back the way it came in figure 2a. Other angles of incidence and propagation of the nonclassical light are also allowed.

It should be understood that the features of figure 2a and indeed other figures are not supposed to truly represent actual dimensions and that the atoms 2 shown in the traps 18 do not necessarily have the positions shown. Furthermore, the example in figure 2a may be adapted so that only a single atom 2 is held in each trap 18. Where multiple atoms are held in a single trap the Rydberg blockade from one energy-level transitioned atom in the trap will also prevent the other atoms in the same trap from transitioning to the Rydberg state.

It should be understood that, at least, any of the variations applicable to the method in general and for the example of figure 1a may be applied to this example and vice versa. Furthermore, for large arrays of atoms 2, a plurality of atoms may transition to the Rydberg state via interacting with the nonclassical input 12, if these atoms are outside of each other's Rydberg blockade radius, however the likelihood of such an event occurring may be minimised if any one or more of, but not limited to, the following conditions occur: the input nonclassical EM radiation 12 has low probabilities of having states of photons higher than two; the nonclassical radiation 12 is directed towards the centre of the trap-array; the control field 14 is directed to only a subset of the matter particles 2.

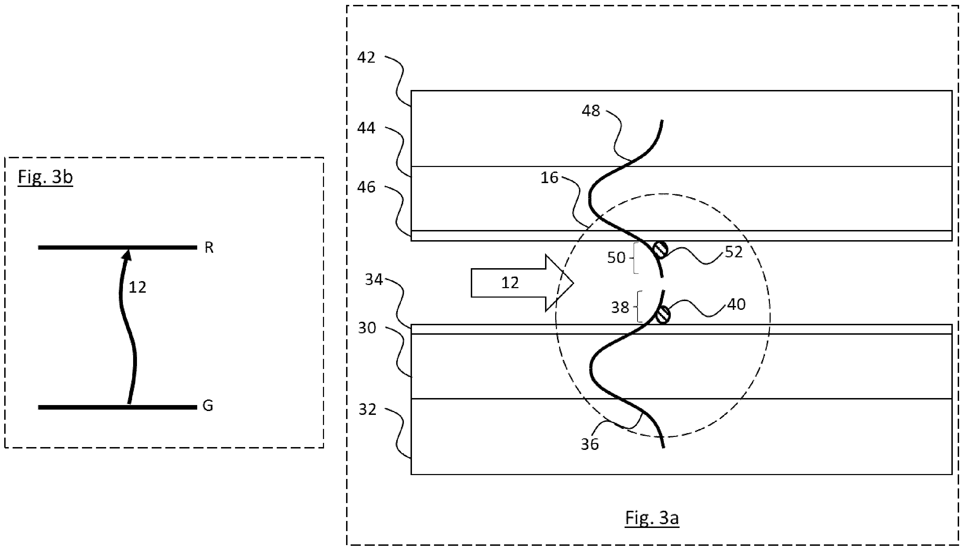

Figure 3a shows a further example of components for giving effect to the method. Like features to previous examples have like references. In this example the matter particles are ions 40, 52. Two integrated optic devices, each with a waveguide core 30, 44, are used to guide trapping EM radiation. The waveguide may be a buried channel waveguide, or other waveguide structure such as an optical fibre. The intensity profile of each trapping EM radiation is shown in figure 3a wherein profile 36 is guided by core 30 whilst profile 48 is guided by core 44. The first device comprises waveguide core 30 having a refractive index and surrounded and bordered on one side by a first lower refractive index cladding layer 34. The waveguide core 30 is also surrounded and bordered on the opposite side by a second lower refractive index cladding layer 32. The thickness of cladding layer 34 is thin enough so that a substantial portion of the evanescent field of the mode profile 36 extends away from and beyond the cladding layer 34 and away from the core layer 30, into free space. This portion of the evanescent field 38 acts to trap the ion 40.

The other integrated optic device is formed from a waveguide core 44 having a refractive index and surrounded and bordered on one side by a first lower refractive index cladding layer 46. The waveguide core 44 is also surrounded and bordered on the opposite side by a second lower refractive index cladding layer 42. The thickness of cladding layer 46 is thin enough so that a substantial portion of the evanescent field of the mode profile 48 extends away from and beyond the cladding layer 46 and away from the core layer 44, into free space. This portion of the evanescent field 50 acts to trap the ion 52.

The two integrated optic devices are held close to one another with a free space gap between them that the two evanescent tails 38, 50 extend into. The cladding layers 34 and 46 are opposite each other such that their respective top surfaces (that are opposite the surfaces bordering their respective cores 30, 44) are facing each other. In this example, the nonclassical EM radiation 12 is propagated between the two devices in the free space gap, however the EM radiation may also be guided along one of the waveguide cores 30, 44. The nonclassical radiation 12 in this example has an energy allowing the ions to transition from the ground state directly to a Rydberg state as shown in figure 3b, however other excitation methods such as figure 1b or 1c may be used. The ion 40 absorbs one of the photons from the nonclassical EM radiation 12 and becomes a Rydberg Ion that exudes a Rydberg blockade preventing ion 52 from absorbing any more of the photons from the nonclassical radiation 12.

Other examples of the method and system may be provided by using ions instead of neutral atoms. Rydberg ions, for example Strontium Rydberg ions, may be generated by exciting a normal trapped ion into the Rydberg state. A laser may bring the outermost electron from the ground state into the Rydberg state. The outermost electron may be tightly bound thus requiring large amounts of energy to induce the transition from the ground state to the Rydberg state. For strontium ions this may require a laser with a UV wavelength of 112.4nm. An alternative to UC would use two lasers where the first laser excites an intermediate state (wavelength of 242.6nm from $4D_{5/2}$ to $6P_{3/2}$) before the second laser finally reaches the Rydberg states (wavelength 304-309nm from $6P_{3/2}$ to nS or nD Rydberg states with n=30-100). Trapping the ions may be accomplished by using static and oscillating electric fields. The Coulomb repulsion of the charged particles may give rise to a linear chain of ions separated by, for example, $5\mu m$. This separation allows each ion to be individually addressed by laser beams to perform the method. An alternative ion to use may be Magnesium.

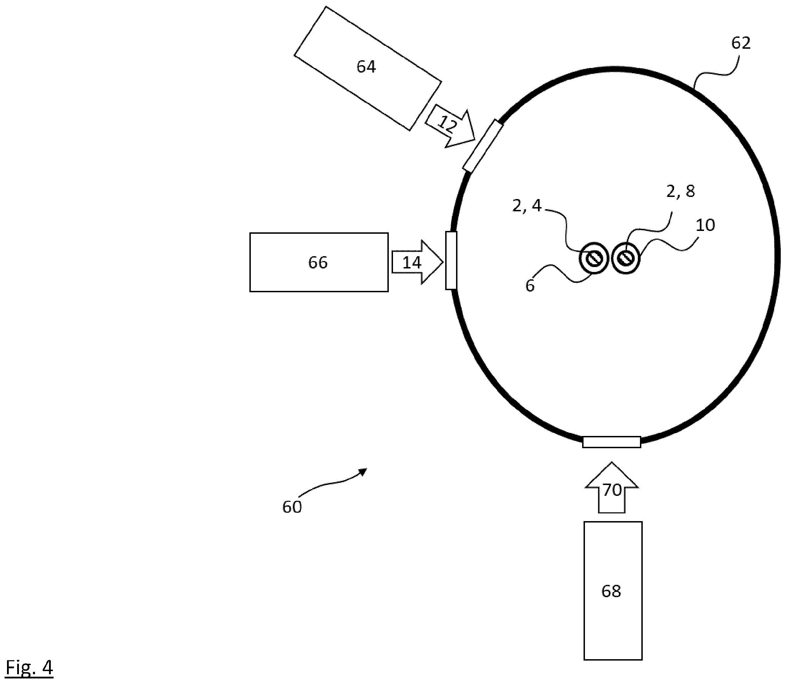

Figure 4 shows an example system 60 for use with any example herein using free space traps. Some features in figure 4 that share the same reference to other figures and thus represent similar features. A vacuum chamber 62 is used to accommodate the traps 6, 10, and atoms 2. The chamber 62 has a plurality of at least partially transparent windows to allow for EM radiation to enter and exit the chamber 62 from different EM sources and systems. A first EM source system 64 is used to input the nonclassical EM radiation 12 into the chamber 62 through one of the windows. A second EM source system 66 is used to input the classical control EM radiation 14 into the chamber 62 through a different one of the windows. A third EM source system 68 is used to input the trapping EM radiation 70 into the chamber 62 through a further different one of the windows. Each respective EM source system may comprise any of, but not limited to: an EM source for generating the respective EM radiation; one or more control electronic modules for controlling the EM output of the EM source and optionally controlling any other component of the source system; one or more bulk optic components such as lenses and mirrors for directing the EM radiation to its target destination; one or more optoelectronic components such as amplifiers, modulators, phase shifters to manipulate the EM radiation before being input to the chamber 62. Other components, described elsewhere herein for generating the required EM radiation for interacting with the matter particles may also form part of the EM systems for figure 4. Figure 4 is merely one example of apparatus usable for implementing the method and systems presented herein, other apparatus configurations are also permissible.

## Claims

1. A method for altering a nonclassical state of EM radiation; the method comprising:

    I) arranging a plurality of matter particles such that:

        i) a first one or more of the plurality of matter particles is held within a first trap,
        ii) a second one or more of the plurality of matter particles is held within a second trap; the first and second traps being spatially separated;

    II) providing an input nonclassical state of EM radiation to the plurality of matter particles; the input nonclassical state comprising a first photon number distribution;
    III) altering the photon number distribution of the input nonclassical state of EM radiation by interacting the input nonclassical state of EM radiation with the plurality of matter particles such that at least one of the matter particles in the first trap is excited to a Rydberg state using a photon from the input nonclassical state of EM radiation; wherein:

        iii) the excitation of the at least one matter particle within the first trap prevents an excitation, to a Rydberg state, of at least one of the matter particles within the second trap; the prevented excitation being an excitation using the input nonclassical state;

iv) the resulting altered nonclassical state comprises a second photon number distribution, the second photon number distribution being different to the first photon number distribution.

2. The method of claim 1 wherein the method outputs the altered nonclassical state of EM radiation comprising the second photon number distribution.

3. The method of claims 1 or 2 wherein the input nonclassical state is a squeezed state.

4. The method of claims 1 or 2 wherein the input nonclassical state is a gaussian state.

5. The method of claim 2 wherein the output nonclassical state is a squeezed non-gaussian state.

6. The method of claim 2 wherein the output nonclassical state is a Fock state.

7. The method of any preceding claim wherein the traps are EM traps.

8. The method of any preceding claim wherein the plurality of traps form a regular array of traps.

9. The method of any preceding claim wherein the centre-to-centre distance between at least two adjacent traps is the same as or less than the wavelength of the nonclassical EM radiation.

10. The method of any preceding claim wherein the centre-to-centre distance between all adjacent traps is the same as or less than the wavelength of the nonclassical EM radiation.

11. The method of any preceding claim wherein the centre-to-centre distance of adjacent traps is half the wavelength of the nonclassical EM radiation.

12. The method of any preceding claim wherein the excited matter particle excites from a ground state to the Rydberg state.

13. The method of any preceding claim wherein the excited matter particle excites from a ground state to the Rydberg state using:

the photon from the input nonclassical state of EM radiation; and, a photon from a different EM radiation.

14. The method of any preceding claim wherein the matter particles are neutral atoms.

15. A system for altering a nonclassical state of EM radiation; the system comprising:

I) trapping apparatus for arranging a plurality of matter particles such that:

i) a first one or more of the plurality of matter particles is held within a first trap, the first trap having a first position; ii) a second one or more of the plurality of matter particles is held within a second trap having a second position; the first and second traps being spatially separated;

II) an EM source for providing an input nonclassical state of EM radiation to the plurality of matter particles; the input nonclassical state comprising a first photon number distribution;

the system configured to alter the photon number distribution of the input nonclassical state of EM radiation from the interaction of the input nonclassical state of EM radiation with the plurality of matter particles where at least one of the matter particles in the first trap is excited to a Rydberg state using a photon from the input nonclassical state of EM radiation; wherein:

the excitation of the at least one matter particle within the first trap prevents an excitation, to a Rydberg state, of at least one of the matter particles within the second trap; the prevented excitation being an excitation using the input nonclassical state; the resulting altered nonclassical state comprises a second photon number distribution, the second photon number distribution being different to the first photon number distribution.

Fig. 1b

R

E

14

12

G

Fig. 1c

R

12

E

14

G

Fig. 1a

2, 8

10

14

d

2, 4

6

12

16

Fig. 2

EP 4 578 823 A1

Fig. 3a

Fig. 3b

Fig. 4

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Julien Vaneecloo: "Nonlinear quantum optics with a single Rydberg superatom coupled to a medium-finesse cavity", THESE DE DOCTORAT DE SORBONNE UNIVERSITE, 22 June 2022 (2022-06-22), XP093161074, Retrieved from the Internet: URL:https://theses.hal.science/tel-0370196 8v1/preview/VANEECLOO_Julien_these_2022.pd f#page=2 * pages 26,66,67; figures 1.8,3.10, 6.1, * * pages 116,119 * * pages 127,131 * * page 140 * | 1-15 | INV. B82B1/00 B82B3/00 B82Y10/00 B82Y20/00 G02F1/35 G02F3/00 G21K1/00 H04B10/70 H04L9/08 |
| A | KRITSANA SRAKAEW: "A subwavelength atomic array switched by a single Rydberg atom", NATURE PHYSICS, vol. 19, no. 5, 16 February 2023 (2023-02-16), pages 714-719, XP093168180, GB ISSN: 1745-2473, DOI: 10.1038/s41567-023-01959-y Retrieved from the Internet: URL:https://www.nature.com/articles/s41567 -023-01959-y.pdf> * the whole document * | 1-15 | |

-----

-----

-/--

TECHNICAL FIELDS SEARCHED (IPC)

B82B
B82Y
G21K
H04L
H04B
G02F
H05G

The present search report has been drawn up for all claims

| Place of search | Date of completion of the search | Examiner |
|---|---|---|
| The Hague | 29 May 2024 | Mérimèche, Habib |

EPO FORM 1503 03.82 (P04C01)

Europäisches
Patentamt

European
Patent Office

Office européen
des brevets

# EUROPEAN SEARCH REPORT

**Application Number**

EP 23 30 7414

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | F. ENGEL: "Observation of Rydberg Blockade Induced by a Single Ion", PHYSICAL REVIEW LETTERS, vol. 121, no. 19, 8 November 2018 (2018-11-08), XP093168188, US ISSN: 0031-9007, DOI: 10.1103/PhysRevLett.121.193401 Retrieved from the Internet: URL:https://journals.aps.org/prl/pdf/10.11 03/PhysRevLett.121.193401> * the whole document * ----- | 1-15 | |
| | | | **TECHNICAL FIELDS SEARCHED (IPC)** |

The present search report has been drawn up for all claims

| Place of search | Date of completion of the search | Examiner |
|---|---|---|
| The Hague | 29 May 2024 | Mérimèche, Habib |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 2 of 2